Europäisches Patentamt

European Patent Office

Office européen des brevets

(19)

(11) Veröffentlichungsnummer: **0 166 134**
**B1**

(12) **EUROPÄISCHE PATENTSCHRIFT**

(45) Veröffentlichungstag der Patentschrift:
**11.05.88**

(51) Int. Cl.⁴: **F 16 B 19/08**

(21) Anmeldenummer: **85105634.1**

(22) Anmeldetag: **08.05.85**

(54) **Blindnietartiges Verbindungselement.**

(30) Priorität: **09.06.84 DE 3421574**

(43) Veröffentlichungstag der Anmeldung:
**02.01.86 Patentblatt 86/1**

(45) Bekanntmachung des Hinweises auf die Patenterteilung:
**11.05.88 Patentblatt 88/19**

(84) Benannte Vertragsstaaten:
**FR GB IT NL**

(56) Entgegenhaltungen:
**AT - B - 343 416**
**DE - A - 2 261 824**
**DE - A - 2 514 950**
**DE - B - 2 201 058**
**GB - A - 2 093 550**

(73) Patentinhaber: **Messerschmitt-Bölkow-Blohm GmbH,
Hünefeldstrasse 1-5, D-2800 Bremen 1 (DE)**

(72) Erfinder: **Pasenau, Hartmut, Bertholdstrasse 2,
D-2820 Bremen 70 (DE)**

EP 0 166 134 B1

## Beschreibung

Die Erfindung betrifft ein blindnietartiges Verbindungselement in Spreiznietform, dessen Schaft an seinem dem Setzkopf entgegengesetzten Schaftende in mit sich zum Setzkopf hin verjüngendem Innenkekgel versehene Schaftsegmente geteilt ist, die durch einen Spreizkern mit durch einen in einer Bohrung zum Setzkopf hin durchgeführten Abreissschaft auseinanderdrückbar sind, wobei der kegelstumpfförmige Spreizkern in sägezahnförmigen Rillen einer Innenratsche der Schaftsegmente einrastbar ist.

Es wird schon seit einiger Zeit angestrebt, Bauteilkomponenten aus Faserverbundwerkstoffen oder Kunststoffen auf ähnliche Art zusammenzufügen wie bei der herkömmlichen Metallbauweise. Es können hierbei jedoch nicht die im Metallbau zum Nieten üblichen Nietpress- oder -schlagverfahren oder erhöhte Temperaturen angewendet werden. Besondere Schwierigkeiten macht deshalb auch das Anbringen von Komponenten an der Schliesskopfseite, beim sogenannten Blindnieten, nicht zugänglicher Stellen.

Aus der GB-A-2 093 550 ist schon ein blindnietartig spreizbares Verbindungselement der eingangs genannten Art bekannt. Wie hieraus ersichtlich ist, reicht der innenkegelförmige Bereich des Schliesskopfendes mit der sich zum Setzkopf verjüngenden Innenratsche noch in das zu benietende Material hinein, so dass der äussere Nietschaft beim Auseinanderdrücken des Schliesskopfendes durch den Spreizkern hauptsächlich die Lochleibung vergrössert und den Bohrungsrand belastet, anstatt radial Drucklast auf die zu verbindenden Teile aufzubringen.

Die Aufgabe der Erfindung wird demgemäss darin gesehen, ein Verbindungselement der eingangs genannten Art zu schaffen, das wie vergleichbare, herkömmliche Verbindungselemente der Metallbauweise bedingt lösbar ist und ein werkstoffgerechtes Zusammenfügen von Bauteilkomponenten aus Faserverbundwerkstoffen, Kunststoffen oder ähnlichen ermöglicht, ohne den Bohrungsrand der Faserverbundbauteile zusätzlich zu belasten.

Diese Aufgabe wird dadurch gelöst, dass bei einem Verbindungselement der eingangs genannten Art erfindungsgemäss der kegelstumpfförmige Spreizkern mit ihm verbundene, in den Teilungsschlitzen zwischen den Schaftsegmenten geführte Haltenocken aufweist, die beim Anziehen des Abreissschaftes an einem Aussenkegel des Nietschaftes zu einem Schliesskopf abspreizend aufgleiten.

In vorteilhafter Fortbildung der Erfindung kann bei dem Blindniet der vorgenannten Art der Spreizkern eine mit der Führungsbohrung des Abreissschaftes fluchtende Bohrung aufweisen, der Nietschaft angerauht und der Setzkopf auf seiner Rückseite mit einem Klebefilm versehen sein. Hierdurch kann beim Setzen des Niets eine Verklebung des Setzkopfes und eine Verschäumung des Schliesskopfes mit der zu verbindenden Struktur erfolgen, womit erstens die Lochleibung und die Spannungsspitzen im Nietbereich vermindert, zweitens eine zusätzliche Verbindung zwischen den miteinander zu vernietenden Sandwichlagen hergestellt wird und drittens die Umgebungsstruktur des Nietbereiches durch Entfallen des Nietschlagens bei höherer Temperatur unbeeinträchtigt bleibt. Das Verkleben des Niets mit der zu verbindenden Struktur als Warmklebung bei mässig erhöhter, für die Struktur unschädlicher Temperatur, das Abreissen des Durchzugszapfens beim Setzen und Befestigen des Niets und das Ausschäumen des Nietschliessbereiches bzw. eines Hohlraumes im Nietbereich können in einem Arbeitsgang erfolgen.

Ein Ausführungsbeispiel der Erfindung ist in der Zeichnung schematisch dargestellt. Es zeigen:

Fig. 1 ein Niet im unbenutzten Zustand,

Fig. 2 einen Querschnitt durch das Niet gemäss Fig. 1,

Fig. 3 das Niet gemäss Fig. 1 im eingesetzten Zustand und

Fig. 4 einen Querschnitt durch das Niet gemäss Fig. 3.

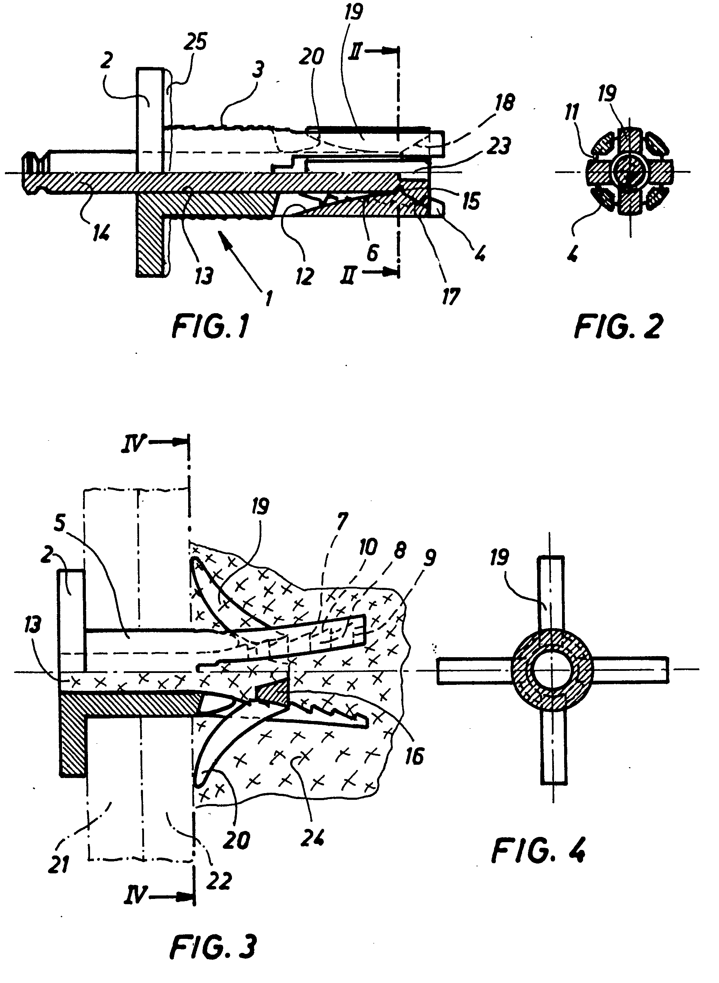

Die Fig. 1 bis 4 zeigen ein Ausführungsbeispiel eines erfindungsgemässen Blindniets 1 der Spreiznietform mit Universalsetzkopf 2 für die Verbindung von Schichtstoffplatten 21, 22 miteinander.

Das Niet 1 hat einen zylindrischen, zur Verbesserung der Klebehaftung angerauhten Schaft 3, der in seinem unteren Bereich in Schaftsegmente 4 geschlitzt ist. Die ungeschlitzte Schaftlänge 5 ist abhängig von der Klemmlänge des Niets.

Die Schaftsegmente 4 sind mit einem sich zum Setzkopf 2 verjüngenden Innenkegel 6 versehen, der derart in sägezahnförmige Rillen 7 aufgeteilt ist, dass sich eine Innenratsche 8 ergibt, bei der die geraden Flächen zum Setzkopf 2 und die schrägen Flächen zum entgegengesetzten Ende weisen. Die ungeschlitzte Schaftlänge 5 umfasst in ihrem in zwischen den Schaftsegmenten 4 befindlichen Teilungsschlitzen 11 übergehenden Teil konisch zum Schaftende sich verjüngende Aufgleitflächen 12.

Innerhalb des Nietschaftes 3 befindet sich in einer Bohrung 13 ein Durchzug-, gleichzeitig Abreisszapfen 14, der über eine Sollbruchstelle 15 mit einem kegelstumpfförmigen Spreizkern 16 verbunden ist. Im unbenutzten, jedoch gebrauchsfertigen Zustand des Niets 1 ist der Abreisszapfen 14 mit einem Spreizkern 16 in einer der letzten Rillen 17 der Innenratsche 8 unverlierbar eingerastet.

Die konische Mantel- oder Mitnehmerfläche 18 des kegelstumpfförmigen Spreizkerns 16 zeigt an ihren den Teilungsschlitzen 11 gegenüberliegenden Flächenteilen mit ihnen verbundene, in den Teilungsschlitzen 11 geführte, abspreizbare Haltenocken 19, deren freie Enden 20 zum Setzkopf 2 gerichtet sind und auf den konischen Aufgleitflächen 12 aufliegen. Die Haltenocken 19 sind so ausgebildet, dass sie im angefalteten Zustand, in den Teilungsschlitzen 11 liegend, nicht über den Aussendurchmesser des Nietschaftes 3 hinausragen. Abreisszapfen 14 mit Spreizkern 16 und Nocken 19 sind aus einem Werkstoff hergestellt, der die richtige Haltewirkung der Nocken 19 gewährleistet.

Die zu verbindenden Teile 21, 22 werden aneinandergepresst, indem der Spreizkern 16 mittels des Abreisszapfens 14 durch die Bohrung 13 und das geschlitzte Schaftende mit dem Innenkegel 6 gezogen wird, wobei der Spreizkern 16 von Zahn zu Zahn oder Rille zu Rille der Innenratsche 8 springt. Hierbei werden die Schaftsegmente 4 nach aussen gespreizt, bis sich der Widerstand erhöht und sich in der Sollbruchstelle 15 die Grenzzugspannung soweit aufbaut, dass der Durchzugzapfen 14 abreisst und der Spreizkern 16 sich in einer bestimmten Grenzrille der Innenratsche 8 festsetzt.

Mit dem Anziehen des Durchzug- und Abreisszapfens 14 sind die Haltenocken 19 in den Teilungsschlitzen 11 an den konischen Aufgleitflächen 12 sich abfaltend und einen Schliesskopf bildend schliesslich an der inneren der zu verbindenden Platten 21, 22 zur Anlage gekommen, so dass die zu verbindenden Platten 21, 22 zwischen Setz- und Schliesskopf des Niets zusammengepresst sind.

Nach Abreissen des Zapfens 14 kann der Hohlraum in dem und um den Nietschaft sowie den Nietschliesskopf herum durch die freigewordene Bohrung 13 und eine mit ihr erfindungsgemäss fluchtende Bohrung 23 im Spreizkern 16 mit einem entsprechenden Klebeschaum 24 ausgefüllt werden. Um eine bessere Klebehaftung zu erzielen und die Lochleibung zu verringern, ist es vorteilhaft, wenn der Nietschaft 3 eine angerauhte Oberfläche aufweist.

Um weiter eine bessere Abdichtung, z.B. gegen Feuchtigkeit und Gasverluste, zu erreichen und zur Erleichterung des Nietsetzens ist das Niet durch einen Klebefilm 25 auf der Rückseite des Setzkopfes 2 einklebbar.

Das Nietwerkzeug lässt sich so konstruieren, dass das Verkleben des Niets, Abreissen des Durchzugzapfens und Ausschäumen des Nietschliessbereiches in einem Arbeitsgang erfolgen kann.

## Patentansprüche

1. Blindnietartiges Verbindungselement in Spreiznietform, dessen Schaft an seinem dem Setzkopf entgegengesetzten Schaftende in mit sich zum Setzkopf verjüngenden Innenkegel versehene Schaftsegmente geteilt ist, die durch einen Spreizkern mit durch einen in einer Bohrung zum Setzkopf durchgeführten Abreissschaft auseinanderdrückbar sind, wobei der kegelstumpfförmige Spreizkern in sägezahnförmigen Rillen einer Innenratsche der Schaftsegmente (4) einrastbar ist, dadurch gekennzeichnet, dass der Spreizkern (16) mit ihm verbundene, in den Teilungsschlitzen (11) zwischen den Schaftsegmenten (4) geführte Haltenocken (19) aufweist, die beim Anziehen des Abreissschaftes (14) an einem Aussenkegel (12) des Nietschaftes (3) zum Schliesskopf abspreizbar aufgleiten.

2. Verbindungselement nach Anspruch 1, dadurch gekennzeichnet, dass der Spreizkern (16) eine mit der Führungsbohrung (13) im Nietschaft (3) fluchtende Bohrung (23) aufweist.

3. Verbindungselement nach Anspruch 1 oder 2, dadurch gekennzeichnet, dass der Nietschaft (3) angerauht ist.

4. Verbindungselement nach einem oder mehreren der vorhergehenden Ansprüche, dadurch gekennzeichnet, dass der Setzkopf (2) auf seiner Rückseite mit einem Klebefilm (25) versehen ist.

## Claims

1. Blind rivet-type connector element of the spreading rivet construction, having a shaft which is divided, at the end opposite the setting head, into shaft segments which have an internal conical face narrowing toward the setting head, the segments being spreadable by means of a spreader core with a setting pin which extends through a bore to the setting head, the frustoconical core being ratchetable in saw-tooth grooves of an internal ratchet of the shaft segments (4), characterised in that the spreader core (16) is connected to retainer cams (19), which are guided in the divisions (11) between the shaft segments (4), the cams, on pulling of the setting pin (14), sliding outwardly on an outer cone (12) of the rivet (3) to form a locking head.

2. Connector element according to claim 1, characterised in that the spreader core (16) has a bore (23) in alignment with the guide bore (13) in the rivet shaft (3).

3. Connector element according to claim 1 or 2, characterised in that the rivet shaft (3) is roughened.

4. Connector element according to one or more of the preceding claims, characterised in that the setting head (2) is provided on its rear surface with an adhesive film (25).

## Revendications

1. Elément de liaison de type rivet caché sous forme de rivet d'écartement dont le corps est subdivisé au niveau de son extrémité opposé à la tête d'appui en des segments de corps présentant un cône intérieur allant en diminuant vers la tête d'appui et s'écartant sous l'effet d'un noyau d'écartement sur un élément arrachable traversant un perçage allant vers la tête d'appui, le noyau d'écartement en forme de tronc de cône s'accrochant dans des nervures en dents de scie d'une surface intérieure à rochet des segments de corps (4), caractérisé en ce que le noyau d'écartement (16) comporte des cames de retenue (19) reliées au noyau et qui sont guidées dans les fentes de division (11) entre les segments de corps (4) cames qui, lors du serrage du corps arrachable (14), glissent sur le cône extérieur (12) du corps (3) du rivet de manière à l'écarter en direction de la tête de fermeture.

2. Elément de liaison selon la revendication 1, caractérisé en ce que le noyau d'écartement (16) comporte un perçage (23) aligné sur le perçage de guidage (13) du corps (3) du rivet.

3. Elément de liaison selon la revendication 1 ou 2, caractérisé en ce que le corps (3) du rivet a une surface rugueuse.

4. Elément de liaison selon l'une ou plusieurs des revendications précédentes, caractérisé en ce que la tête d'appui (2) présente un film de colle (25) sur la face arrière.

FIG. 1

FIG. 2

FIG. 3

FIG. 4